# EUROPÄISCHE PATENTSCHRIFT

(11) **EP 1 779 499 B1**
(45) Veröffentlichungstag und Bekanntmachung des Hinweises auf die Patenterteilung: **16.04.2008**
(21) Anmeldenummer: 05771888.4
(22) Anmeldetag: 05.08.2005
(51) Int. Cl.: H02K 55/04

(54) **MASCHINE MIT EINER ERREGERWICKLUNG AUS HOCH-T<sb>C</sb>-SUPRALEITERN IN EINER HALTEEINRICHTUNG**
MACHINE HAVING A HIGH T<sb>C</sb> SUPERCONDUCTOR FIELD WINDING IN A RETAINING DEVICE
MACHINE POURVUE D'UN ENROULEMENT D'EXCITATION CONSTITUE DE SUPRACONDUCTEURS A HAUTE T<SB>C</SB> ET SITUE DANS UN DISPOSITIF DE RETENUE

(30) Priorität: 17.08.2004 DE 102004039855
(43) Veröffentlichungstag der Anmeldung: 02.05.2007
(73) Patentinhaber: SIEMENS AKTIENGESELLSCHAFT, 80333 München (DE)
(72) Erfinder: RIES, Günter, 91056 Erlangen (DE); NEUMÜLLER, Heinz-Werner, 91080 Uttenreuth (DE)
(86) Internationale Anmeldenummer: PCT/EP2005/053879
(87) Internationale Veröffentlichungsnummer: WO 2006/018402

(56) Entgegenhaltungen:
- WO-A-01/59909
- WO-A-20/04068682
- DE-A1- 3 823 938
- FR-A- 2 215 684
- GB-A- 1 449 652
- US-A- 4 323 801

## Beschreibung

Die Erfindung bezieht sich auf eine Maschine mit einem um eine Rotationsachse drehbar gelagerten Rotor, der einen ungekühlten Rotorkörper enthält, welcher an seiner Außenseite sich axial erstreckende Ausnehmungen aufweist mit der Rotationsachse zugewandten Bodenteilen, die im Querschnitt gesehen längs Kreissehnen liegen, wobei in den Ausnehmungen jeweils mindestens ein Kryostat angeordnet ist, in dem sich eine von einer Halteeinrichtung mit einer Zugaufnahme an dem jeweiligen Bodenteil gehaltene Erregerwicklung mit Wicklungsteilen vom Rennbahnspulen-Typ befindet, die Supraleiter mit Hoch-T_{c}-Supraleitermaterial enthalten. Eine entsprechende Maschine geht aus der DE 103 03 307 A1 hervor.

In Maschinen der Supraleitungstechnik wie Synchronmotoren und -generatoren können mit einer rotierenden supraleitenden Erregerwicklung höhere Leistungsdichten, geringere Verluste und weitere Vorteile erreicht werden. Der Supraleiter der Wicklung muss dabei gekühlt werden, wobei die Wicklung aus Gründen einer thermischen Isolation in einen hochvakuumisolierten Kryostaten eingeschlossen sein muss. Das hervorgerufene Drehmoment greift am Supraleiter an und muss über geeignete Übertragungselemente auf eine warme Rotorwelle weitergeleitet werden. Insbesondere in großen Einheiten beträgt die auf die Supraleiterwicklung wirkende Zentrifugalbeschleunigung einige 1000 g (g = Erdbeschleunigung), die ohne Schädigung des Supraleitermaterials aufgenommen werden müssen. Radiale Flieh- und azimutale Magnetkräfte sind von der Wicklung über geeignete Befestigungsmittel auf einen mechanisch stabilen Rotorkörper bzw. einen Wicklungs- oder Rotorkern zu übertragen. Dabei kann dieser Kern vorzugsweise aus magnetisch permeablem Material wie Eisen bestehen, um so eine Erhöhung des Erregerfeldes zu erreichen.

Bekannt sind Ausführungsformen von Maschinen mit einer Wicklung, die direkt auf einem zylinderförmigen Rotorkörper befestigt ist, der aus unmagnetischem oder magnetischem Material besteht und sich auf der tiefen Wicklungstemperatur befindet (vgl. DE 199 43 783 A1, US 4,146,804 A1, WO 98/02953 A1). Bei entsprechenden großen Einheiten wie z.B. Kraftwerksgeneratoren umfasst der Rotorkörper dann aber eine große kalte Masse von bis zu etlichen 10 Tonnen. Dies bedingt lange Abkühl- und Aufwärmzeiten, stabile Drehmomentsübertragungselemente auf die warme Welle mit einem hohen Wärmestrom in den Kaltbereich sowie einen großen Vakuumkryostaten, der den kalten Kern und die Wicklung umschließt.

Es sind auch Maschinen mit Rotoren bekannt, deren Rotorkörper nicht auf die Temperatur der Wicklung gekühlt wird (vgl. EP 0 805 546 B1, EP 0 690 550 B1). Die Wicklungen sind dabei vom so genannten Rennbahn- oder Rechteckspulen-Typ und zusammen mit einem Kryostat-Vakuumbehälter, einem Kryoschild und das Kühlmittel führenden Kühlrohren in eine in den warmen Rotorkern eingefräste Nut eingelegt. Die Nut ist dabei durch ein verhältnismäßig massives Verschlusselement nach außen verschlossen, über das auf die Wicklung im Betrieb wirkende Kräfte aufgenommen und auf den Rotorkern übertragen werden. Aufhängeschlaufen bzw. Honigwabenstrukturen übertragen dabei Kräfte zwischen der Wicklung und dem Schild bzw. dem Schild und dem Verschlusselement des Rotorkerns. An den Enden ist der Wicklungskryostat durch radiale Bohrungen im Rotorkern geführt. Als Supraleitermaterial für die Wicklungen ist beispielsweise das klassische metallische Supraleitermaterial Nb₃Sn vorgesehen, das mit 10 K kaltem He-Gas gekühlt wird. Einzelheiten, wie die Wicklung und der Kryostat in der jeweiligen Nut ausgebildet sind, gehen aus diesem Stand der Technik nicht hervor. Ein Wickeln und eine Montage direkt in den Nuten erfordern jedoch einen erheblichen Aufwand.

Auch bei der aus der EP 1 261 114 A1 zu entnehmenden Maschine ist deren Rotorkörper ungekühlt. Dieser Rotorkörper weist an gegenüberliegenden Längsseiten Abplattungen und somit Ausnehmungen auf, so dass dort Außenbereiche mit jeweils bezüglich einer Zylinderform kreissegmentartigem Querschnitt ausgebildet sind. In diesen Außenbereichen befindet sich wenigstens ein Kryostat zur Aufnahme der Leiter der zu kühlenden Erregerwicklung. An den Enden ist der Wicklungskryostat durch radiale Bohrungen im Rotorkern geführt. Deshalb ist zur Montage der Rotorkern dreiteilig ausgebildet. Der magnetische Kern mit Abplattungen umfasst die Wicklung; axial beidseitig sind mit Bolzen Endstücke angesetzt, die auf einer Seite Aussparungen für die Wicklung und am nach außen weisenden Ende die Wellenenden des Rotors tragen. Diese Endstücke können aus unmagnetischem Material wie rostfreiem Stahl bestehen. Durch den Rotorkörper hindurch und gegenüber diesem thermisch isoliert erstreckt sich wenigstens ein kaltes Zugelement einer Halteeinrichtung, von dem die radial gegenüberliegenden Teile des oder der Kryostaten und damit der Erregerwicklung gehalten werden. Eine derartige Befestigung und Halterung der Erregerwicklung ist aufwendig. Außerdem ist mit dieser Ausbildung der Maschine und insbesondere ihrer Halteeinrichtung eine Aufnahme tangentialer Kräfte, die beim Betrieb und insbesondere bei Kurzschlüssen oder anderen Störungsfällen wirken, nicht hinreichend möglich.

Aus der eingangs genannten DE-A1-Schrift ist eine Maschine zu entnehmen, bei der die Montage der Wicklung gegenüber diesem Stand der Technik vereinfacht ist und die dennoch eine sichere Fixierung auch bei großen radialen und azimutalen Kräften zulässt. Dort werden nämlich auf kalte, sich durch den Rotorkörper hindurch erstreckende und gegenüber diesem thermisch zu isolierende Zugelemente verzichtet. Ihre Halteeinrichtung überträgt die auf die Wicklung im Betrieb wirkenden Kräfte im Wesentlichen nur in Form von Zugkräften auf den ungekühlten Rotorkörper im Bereich der Bodenteile der Ausnehmungen. Damit wird auch eine zumindest teilweise Vorfertigung der Wicklung ermöglicht, deren wenigstens ein Wicklungsteil als flache Rennbahnspule ausgebildet sein kann. Auch ist der Kryostat zumindest teilweise vorzufertigen und an seitlich abgeplatteten Bereichen des warmen Rotorkörpers zu befestigen bzw. dort zu komplettieren. Der Rotorkörper hat also keine Längsnuten, die die Wicklung oder Teile ihrer Halteeinrichtung aufnehmen.

Für die bekannte Maschine sind erhältliche bandförmige Supraleiter mit BiSrCaCuO-Hoch-T_{c}-Supraleitermaterial in einer Silbermatrix oder mit einem YBaCuO-Hoch-T_{c}-Supraleitermaterial auf einem Trägerband zu verwenden. Solche Leiter tragen Ströme von 100 A bis höchstens einige 100 A. Um bei großen Maschinen das erforderliche Erregerfeld zu erzeugen, sind deshalb hohe Windungszahlen erforderlich. D.h., dass die Induktivität, die proportional zum Quadrat der Windungszahl ist, dann sehr hoch wird. Dies bedeutet bei im Betrieb nötigen schnellen Erregungsänderungen wie Lastwechsel, Lastabwurf oder Kurzschlüssen eine gegebenenfalls nicht beherrschbare hohe Erregerspannung.

Aufgabe der vorliegenden Erfindung ist es deshalb, die Maschine mit den eingangs genannten Merkmalen dahingehend auszugestalten, dass solche Erregerspannungen beherrschbar werden.

Diese Aufgabe wird erfindungsgemäß mit den in Anspruch 1 angegebenen Maßnahmen gelöst. Demgemäß soll bei der Maschine mit den eingangs genannten Merkmalen die Erregerwicklung aus mindestens einem transponierten Röbelleiter mit wenigstens annähernd rechteckigem Querschnitt erstellt sein, wobei jeder transponierte Röbelleiter N axial verlaufende, um seine Mittelachse verseilte Einzelleiterbänder mit dem Hoch-T_{c}-Supraleitermaterial aufweist, deren Flachseiten zumindest annähernd parallel zu dem jeweiligen Bodenteil ausgerichtet sind, und wobei die Anzahl N an Einzelleiterbändern jedes transponierten Röbelleiters mindestens 5 beträgt.

Die mit dieser Ausgestaltung der Erfindung verbundenen Vorteile sind darin zu sehen, dass sich mit der Verwendung solcher transponierter HTS(Hoch-T_{c}-Supraleiter)-Röbelleiter der kritische Strom gegenüber einer Erstellung der Erregerwicklung aus einem einzelnen HTS-Leiterband auf N · I_{c} erhöht und zugleich die Induktivität um den Faktor 1/N² vermindert wird. Die Induktivität L und damit die mögliche Anzahl N richtet sich dabei nach der geforderten Erregungsänderung dI/dt und der zulässigen maximalen Erregerspannung U = L · dI/dt. Außerdem wird mit der Verseilung der Einzelleiterbänder auf Grund einer gegenseitigen magnetischen Entkopplung zumindest weitgehend die Induktion von unerwünschten Schleifenströmen unterbunden. Mit der genannten Mindestanzahl an HTS-Einzelleiterbändern pro transponiertem HTS-Röbelleiter lassen sich die genannten Forderungen erfüllen.

Vorteilhafte Ausgestaltungen der erfindungsgemäßen Maschine gehen aus den von Anspruch 1 abhängigen Ansprüchen hervor. Dabei kann die Ausführungsform nach Anspruch 1 mit den Merkmalen eines der Unteransprüche oder vorzugsweise auch denen aus mehreren Unteransprüchen kombiniert werden. Demgemäß kann die insbesondere als Synchronmotor oder als Synchrongenerator ausgebildete Maschine nach der Erfindung zusätzlich noch folgende Merkmale aufweisen:
- So kann die Erregerwicklung mehrere Lagen aus dem transponierten HTS-Röbelleiter aufweisen.
- Selbstverständlich kann die Erregerwicklung aus mehreren Rennbahnspulen zusammengesetzt sein, die insbesondere vorgefertigt werden können.
- Die Einzelleiterbänder innerhalb des transponierten HTS-Röbelleiters können jeweils mit einer eigenen Isolation oder einem elektrisch schlecht-leitenden Belag versehen sein, um so Wechselstromverluste auf Grund von induzierten Schleifeströmen zu begrenzen.
- Aus demselben Grund kann auch der transponierte HTS-Röbelleiter selbst von einer Isolation umhüllt sein.
- Die Erregerwicklung kann mit einem ausgehärteten Harz imprägniert sein, um die Kraftübertragung zu verbessern und Leiterbewegungen zu unterbinden.
- Vorzugsweise kann die Halteeinrichtung rinnen- oder schienenartige Halteelemente aufweisen, die jeweils in Richtung auf die Rotorachse hin eine Öffnung zur Aufnahme der Erregerwicklung oder Teilen von dieser bilden. Solche Elemente sind zu einer Kraftübertragung besonders geeignet.
- Deshalb können diese Halteelemente bevorzugt aus Metall bestehen.
- Um gegebenenfalls eine elektrische Verbindung zwischen metallischen Halteelementen und der Erregerwicklung, insbesondere bei fehlender oder unzureichender Isolation der Röbelleiter, zu unterbinden, kann sich zwischen diesen Elementen und dem jeweiligen Teil der Erregerwicklung eine Isolation in Form mindestens eines entsprechenden Zwischenelementes befinden.
- Besonders vorteilhaft kann in oder an den Halteelementen mindestens ein Kühlkanal für ein Kältemittel vorhanden sein. Dabei kann sich der mindestens eine Kühlkanal bevorzugt an der der Erregerwicklung zugewandten Seite des jeweiligen Halteelementes befinden, um so eine gute thermische Ankopplung des HTS-Materials an das Kältemittel zu gewährleisten.
- Zur Verbesserung dieser thermischen Ankopplung kann sich zwischen den Halteelementen und dem jeweiligen Teil der Erregerwicklung noch mindestens ein Element aus einem thermisch gut-leitenden Material befinden.
- Besonders vorteilhaft wird ein Stator vorgesehen, der für einen Rotor mit normalleitender Erregerwicklung ausgelegt ist und den Rotor mit der Erregerwicklung aus dem wenigstens einen transponierten HTS-Röbelleiter enthält. Bei solchen erfindungsgemäßen Maschinen ist bei gleicher abgegebener Leistung ein vergleichsweise größerer Gesamtwirkungsgrad möglich.

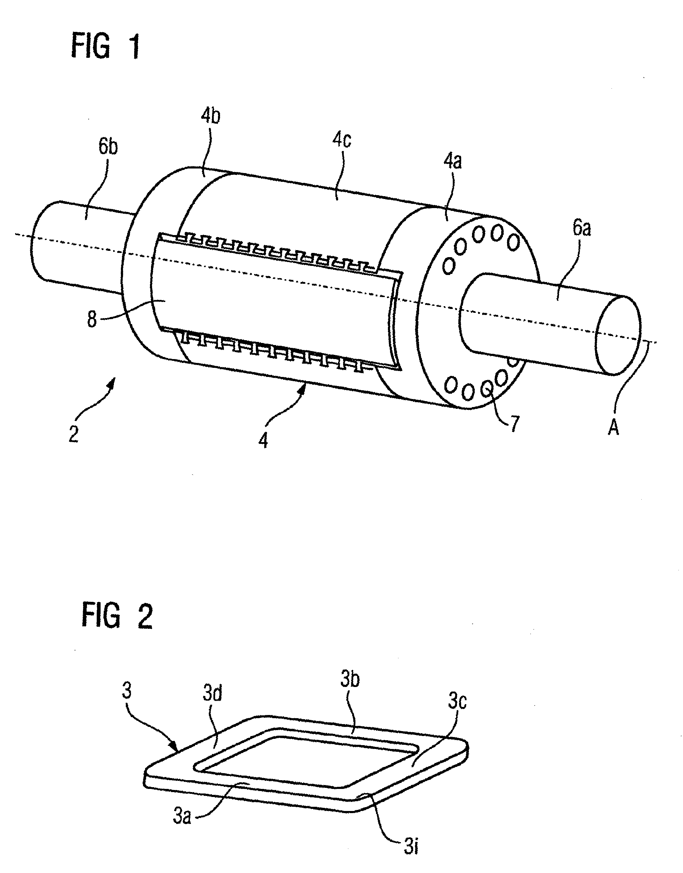

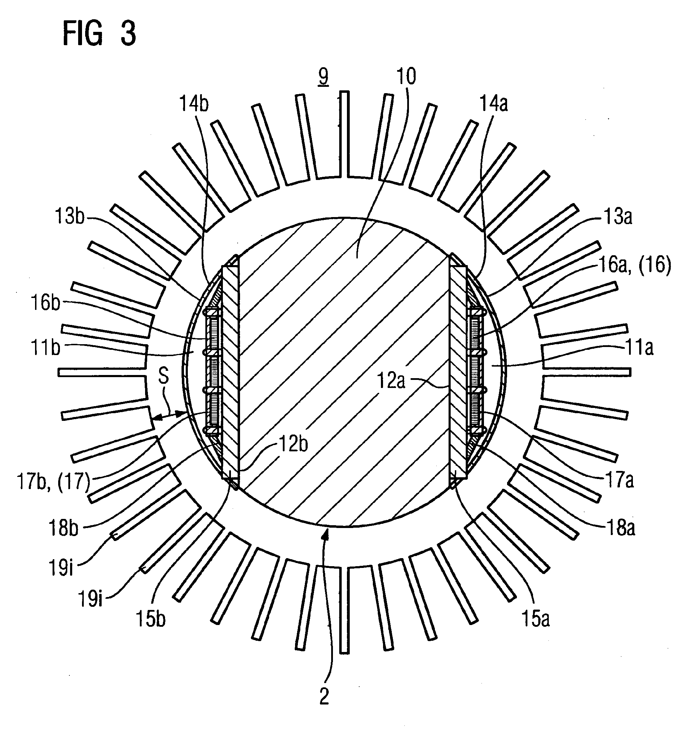

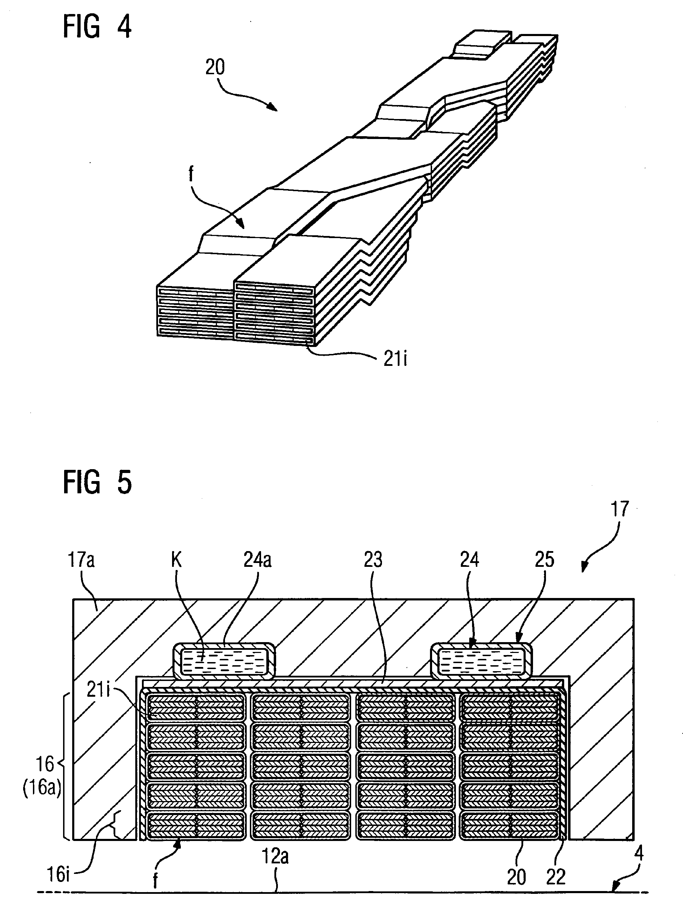

Weitere vorteilhafte Ausgestaltungen der erfindungsgemäßen Maschine gehen aus den vorstehend nicht angesprochenen Unteransprüchen und der nachfolgend erläuterten Zeichnung hervor. Dabei zeigen in jeweils schematisierter Form
- deren Figur 1: eine bekannte Ausführungsform eines Rotors mit Kryostat in Schrägansicht,
- deren Figur 2: eine Rennbahnspule dieses Rotors in Schrägansicht,
- deren Figur 3: einen Querschnitt durch diesen Rotor,
- deren Figur 4: einen bekannten HTS-Röbelleiter in Schrägansicht
sowie
- deren Figur 5: einen Querschnitt durch einen Teil der mit einem derartigen Röbelleiter erstellten Erregerwicklung einer erfindungsgemäßen Maschine.

Dabei sind in den Figuren sich entsprechende Teile mit denselben Bezugszeichen versehen.

Beim Aufbau und der Anordnung der Rotorwicklung einer erfindungsgemäßen Maschine wird von einer Ausführungsform ausgegangen, wie sie aus der eingangs genannten DE-A1-Schrift zu entnehmen ist.

Von einer entsprechenden Maschine zeigt Figur 1 die Schrägansicht auf ihren um eine Rotorachse A drehbar gelagerten Rotor 2, der beispielsweise zweipolig ausgebildet sein kann (vgl. DE 199 43 783 A1). Die Erregerwicklung des Rotors ist aus einer entsprechenden Anzahl von Spulen zusammengesetzt, von denen eine einzige in Figur 2 angedeutet und mit 3 bezeichnet ist. Die Ausführungsform der Spule ist vom so genannten Rennbahn(race track)-Typ. Unter einer solchen Rennbahnspule einer erfindungsgemäßen Maschine sei in diesem Zusammenhang jede Spule oder Teilwicklung verstanden, die gemäß Figur 2 eine zumindest annähernd rechteckige Fläche einnimmt, an ihren Längsseiten lang gestreckte, insbesondere gerade Seitenteile oder- schenkel 3a, 3b, ferner abgerundete Eckteile 3i sowie gegebenenfalls an ihren Breit- oder Stirnseiten zwischen den jeweiligen Eckteilen 3i verlaufende, insbesondere gerade Querteile oder -schenkel 3c, 3d aufweist. Entsprechende Spulen werden auch als Rechteck-Spulen bezeichnet.

Bei einem Rotor mit derartigen Spulen müssen die Wicklungsenden der Wicklung seinen massiven Rotorkörper 4 durchdringen. Gemäß der in Figur 1 angedeuteten Ausführungsform ist deshalb der Rotorkörper 4 zusammensetzbar. Z.B. ist er dreigeteilt und umfasst zwei scheibenförmige stirnseitigen Endstücke 4a und 4b sowie einen zwei radial gegenüberliegende Ausnehmungen aufweisenden, die flachen Rennbahnspulen 3 aufnehmenden Mittelteil 4c. Wellenteile 6a und 6b mit den jeweiligen Endstücken 4a bzw. 4b des Rotorkörpers werden dann mit beispielsweise genuteten Flanschen erst nach einem Zusammenbau des jeweiligen Gehäuses 8 eines Spulenkryostaten an dem Mittelteil 4c befestigt, beispielsweise mit diesem verschraubt. In der Figur sind Löcher 7 zur Aufnahme entsprechender Schraubbolzen ersichtlich.

Abweichend von dem dargestellten Ausführungsbeispiel kann der Rotor einer erfindungsgemäßen Maschine selbstverständlich auch eine höhere Polzahl als zwei besitzen.

Figur 3 zeigt einen Querschnitt durch den Aufbau des Rotors 2 nach Figur 1 innerhalb eines in der Figur nur teilweise ausgeführten Stators 9. Weiterhin sind in der Figur bezeichnet mit
- 10: ein ungekühlter Kern des Rotorkörpers 4 aus ferromagnetischem Material wie insbesondere Eisen,
- 11a, 11b: radial gegenüberliegende Ausnehmungen des Rotorkerns 4 an der Außenseite, die im Querschnitt gesehen kreissegmentartig sind und sich axial, d.h. parallel zur Achse A des Rotors erstrecken,
- 12a, 12b: der Rotationsachse A zugewandte Bodenteile der Ausnehmungen, die im Querschnitt gesehen längs Kreissehnen oder -sekanten liegen,
- 13a, 13b: Kryostaten jeweils mit Vakuumwand 14a bzw. 14b und Bodenplatte 15a bzw. 15b,
- 16a, 16b: Spulen oder Wicklungsteile einer Erregerwicklung 16 vom Rennbahnspulentyp mit HTS-Röbelleitern,
- 17a, 17b: schienen- oder rinnenartige Halteelemente einer Halteeinrichtung 17 in dem Kryostaten 13a bzw. 13b zur Anordnung und Halterung der entsprechenden Rennbahnspule und zu einer Zugaufnahme bzw. -übertragung an dem jeweiligen Bodenteil 12a bzw. 12b,
- 18a, 18b: Spulenaufhängungselemente,
- 19i: einige radial verlaufende Schlitze des Stators 9
sowie mit
- S: ein Spalt zwischen dem Rotor und dem Stator.

Die Halterung der HTS-Spulen 16a, 16b mittels der Halteeinrichtung 17 über ihre Halteelemente 17a bzw. 17b an den Bodenteilen 12a bzw. 12b ist bekannt (vgl. z.B. die eingangs genannte DE-A1-Schrift).

Erfindungsgemäß sollen die HTS-Spulen (bzw. -Spulenteile) 16a, 16b der Erregerwicklung 16 mit einem oder mehreren transponierten HTS- Röbelleitern erstellt werden. Ein entsprechendes Ausführungsbeispiel eines solchen Röbelleiters ist in Schrägansicht in Figur 4 angedeutet. Entsprechende Leiter sind prinzipiell bekannt (vgl. WO 01/59909 A1, DE 102 23 542 A1). Der hier zu verwendende Röbelleiter 20 hat selbst einen wenigstens annähernd rechteckigen Querschnitt, wobei ein solcher transponierter Röbelleiter N zumindest weitgehend axial und großenteils parallel verlaufende Einzelleiterbänder 21i mit dem Hoch-T_{c}-Supraleitermaterial aufweist. Die Anzahl N an Einzelleiterbändern 21i jedes transponierten Röbelleiters 20 soll dabei mindestens fünf, vorzugsweise mindestens sieben betragen und liegt gemäß dem gewählten Ausführungsbeispiel bei neun. Die Einzelleiterbänder können dabei vorteilhaft isoliert und/oder mit einem resistiven Belag versehen sein. Beispielsweise können YBaCuO-Bänder mit elektrisch schlecht leitendem Substratband verarbeitet sein. Der gesamte Röbelleiter ist vorzugsweise mit einer elektrischen Isolierung umhüllt. Die Isolierungen verringern die Verluste in wechselnden Magnetfeldern. In der Figur sind ferner die Flachseiten der Einzelleiterbänder 21i mit f bezeichnet.

Figur 5 zeigt einen Querschnitt durch einen Teil einer Rotorwicklung 16, die mehrere Lagen 16i aus entsprechenden Röbelleitern 20 aufweist. Die einzelnen Röbelleiter können dabei zu einer oder auch mehreren Rennbahnspulen gehören. D.h., die Erregerwicklung lässt sich aus mehreren, vorzugsweise vorzufertigenden Rennbahnspulen 3 zusammensetzen.

Die in Figur 5 gezeigten Wicklungsteile16a der Erregerwicklung 16 sind jeweils in mindestens ein rinnen- oder schienenartiges Halteelement 17a eingelegt, das Teil einer Halteeinrichtung 17 ist. Im Allgemeinen werden mehrere solcher Halteelemente vorgesehen. Sie sind in Richtung auf die Rotorachse A hin offen, topfförmig mit einer im Querschnitt gesehen U-Form gestaltet und bestehen insbesondere aus Festigkeitsgründen aus Metall wie z.B. Stahl. Dabei sind die HTS-Einzelleiterbänder 21i jedes Röbelleiters 20 so angeordnet, dass ihre Flachseiten f zumindest annähernd parallel zu dem zugeordneten Bodenteil (12a, 12b) der Ausnehmung (11a, 11b) in dem Rotorkern (10) gerichtet sind (vgl. hierzu auch Figur 3). Das nachfolgend als Metallschiene bezeichnete schienenartige Halteelement 17a dient insbesondere zur Aufnahme nach außen hin wirkender Zentrifugalkräfte (vgl. die eingangs genannte DE-A1-Schrift).

In die jeweilige Metallschiene 17a sind vorteilhaft an ihrer der Erregerwicklung 16 zugewandten Unterseite mehreren von einem kryogenen Kältemittel K durchströmten Kühlkanälen 24 integriert. Hierzu sind in Ausnehmungen 25 entsprechende Kältemittelrohre 24a zum Beispiel aus Cu (Kupfer) angeordnet. Das Kältemittel befindet sich somit in unmittelbarer Nähe des Leiterpakets aus den einzelnen Lagen 16i der Wicklung 16. Um die Wärmeabfuhr aus der Wicklung an das Kältemittel K noch weiter zu verbessern, kann zwischen dieser und der Metallschiene 17a ein gut-wärmeleitendes Element 23, z.B. in Form einer Schicht oder eines Streifens aus Cu-Blech, eingefügt werden. Dieses wärmeleitende Element 23 steht in enger thermischer Verbindung mit einem 24, die sich z.B. in entsprechenden Ausnehmungen der Metallschiene 17a oder an dessen Außenseite befinden. Gegebenenfalls kann man noch zwischen der Erregerwicklung 16 und der Metallschienen 17a elektrisch isolierende Zwischenlagen bzw.-elemente 22 vorsehen, falls die elektrische Isolation der Erregerwicklung selbst nicht ausreichen sollte.

Vorteilhaft ist der Rotor 2 mit seiner Erregerwicklung 16 aus den HTS-Leitern 20 vom Röbelleiter-Typ innerhalb eines Stators 9 untergebracht, der für einen Rotor mit normalleitender Erregerwicklung ausgelegt ist. Gegenüber einer solchen Ausführungsform mit normalleitender Erregerwicklung ist dann bei der erfindungsgemäßen Maschine der Luftspalt S zwischen dem Rotor 2 und dem Stator 9 (vgl. hierzu Figur 3) um einen Faktor 1,5 bis 4 größer. Um den magnetischen Fluss und damit die elektrische Leistung der Maschine auf gleicher Größe zu halten, wird dann die Amperewindungszahl in der Erregerwicklung 16 entsprechend erhöht. Dies ist wegen der Verwendung der transponierten Röbelleiter 20 für die Wicklung 16 im Allgemeinen ohne Schwierigkeiten realisierbar. Auf diese Weise ist eine schnelle Erregungsänderung des Rotors ohne unzulässig hohe Erregerspannungen möglich. Durch den größeren Luftspalt S erniedrigt sich die synchrone Reaktanz X_{d} der Maschine. Dies hat weniger Spannungsänderung und Regelbedarf bei Laständerungen zur Folge und erhöht die Stabilität am Netz. Ferner sinken auch Gasreibungsverluste und von den Ständerzähnen induzierte magnetische Zusatzverluste an der Rotoroberfläche. Außerdem spart die supraleitende Erregerwicklung 16 die ohmschen I²R-Verluste, aber auch Lüfterverluste durch weniger benötigte Kühlleistung und Verluste in der Erregereinrichtung. Der Gesamtwirkungsgrad steigt, wie aus einem in der nachfolgenden Tabelle gezeigten Ausführungsbeispiel ersichtlich ist, um beispielsweise etwa 0,5 % trotz einer Zusatzleistung zum Betrieb einer Kältemaschine. Die in der Tabelle angegebenen Vergleichswerte beziehen sich dabei auf eine konventionelle Maschine mit normalleitender Statorwicklung und einem Rotor mit normalleitender Erregerwicklung, z.B. aus Cu-Leitern. Die angegebenen Werte für die Maschine nach der Erfindung ergeben sich, wenn man den Rotor dieser konventionellen Maschine gegen einen erfindungsgemäß gestalteten Rotor 2 mit einer Erregerwicklung 16 aus den besonderen transponierten Röbelleitern 20 austauscht, wobei in beiden Maschinen der magnetische Fluss zumindest in etwa auf die gleiche Größe eingestellt wird.

**Tabelle**

| 250 MVA-Generator | Einheit | Konventionelle Maschine | Erfindungsgemäße Maschine |
|---|---|---|---|
| Kaltlast gesamt bei 30 K | W | - | 461,0 |
| Kältemaschine | W | - | 4,61E+04 |
| Ständerwicklung -I²R | W | 2,13E+05 | 2,13E+05 |
| Eisenverluste Joch | W | 3,54E+05 | 3,54E+05 |
| Lüfter + Reibung | W | 1,20E+06 | 7,30E+05 |
| Zusatzverluste | W | 4,46E+05 | 2,60E+05 |
| Rotorwicklung I²R | W | 4,60E+05 | 0,00E+00 |
| Erregerwicklung | W | 1,00E+05 | 5,50E+04 |
| Verluste gesamt | W | 2,77E+06 | 1,66E+06 |
| Verluste relativ | % | 1,30 | 0,77 |

Vorstehend nicht näher erläuterte Details der erfindungsgemäßen Maschine sind bekannt und insbesondere in der eingangs genannten DE-A1-Schrift beschrieben. Demgemäß kann der Rotor 2 noch so ausgeführt sein, dass er zumindest einige der nachfolgenden Merkmale, vorzugsweise auch Kombinationen aus mehreren dieser Merkmale aufweist:
- Der wenigstens eine Kryostat 13a, 13b kann zumindest teilweise vorgefertigt und in den Ausnehmungen 11a, 11b befestigt sein.
- Der wenigstens eine Kryostat 13a, 13b kann eine eine Zylinderform des Rotorkörpers 4 ergänzende Außenkontur besitzen.
- Der wenigstens eine Kryostat 13a, 13b kann zumindest teilweise aus elektrisch gut leitendem Metall bestehen und insbesondere mit seiner Außenwand 14a, 14b als ein elektromagnetischer Dämpferschild wirken.
- Die Halteeinrichtung 17 kann schlaufenförmige und/oder stabförmige Zugelemente aufweisen.
- Dabei können die Zugelemente derart ausgebildet sein, dass sie eine Längskontraktion der Rotorwicklung 16 bei einer Abkühlung gegenüber dem Kryostaten 13a, 13b erlauben.
- Außerdem können dabei die Zugelemente aus thermisch isolierendem Material hinreichender mechanischer Festigkeit bestehen.
- Die mindestens eine Spule 16a, 16b der Rotorwicklung 16 kann eine in radialer Richtung zu messende Wicklungshöhe aufweisen, die durch die maximal zulässigen, summierten Druckbeanspruchungen der supraleitenden Röbelleiter der jeweiligen Spule auf Grund von Zentrifugal und/oder Drehmomentkräften begrenzt ist.
- Dabei können mehrere Spulen der Rotorwicklung jeweils in einer Wicklungskammer angeordnet sein, wobei die maximale Anzahl der Kammern und/oder Spulen durch die vorgegebenen Windungszahl und die maximal zulässige Wicklungshöhe der jeweiligen Spule in der ihr zugeordneten Kammer festgelegt ist.
- Die Rotorwicklung 16 kann zumindest teilweise vorgefertigt sein.
- Bevorzugt können die achsenparallel an der Rotorwicklung 16 oder durch diese hindurch verlaufenden Kühlmittelleitungen bzw. -kanäle 24 Teil eines Thermosiphon-Leitungssystems für das Kältemittel K sein, in dem eine selbst induzierte Strömung des Kältemittels unter Ausnutzung der Zentrifugalbeschleunigung angeworfen wird.

## Patentansprüche

1. Maschine mit einem um eine Rotationsachse (A) drehbar gelagerten Rotor (2), der einen ungekühlten Rotorkörper (4) enthält, welcher an seiner Außenseite sich axial erstreckende Ausnehmungen (11a, 11b) aufweist, mit der Rotationsachse (A) zugewandten Bodenteilen (12a, 12b), die im Querschnitt gesehen längs Kreissehnen liegen, wobei in den Ausnehmungen (11a, 11b) jeweils mindestens ein Kryostat (13a, 13b) angeordnet ist, in dem sich eine von einer Halteeinrichtung (17) mit einer Zugaufnahme an dem jeweiligen Bodenteil (12a, 12b) gehaltene Erregerwicklung (16) mit Wicklungsteilen (16a, 16b) vom Rennbahnspulen-Typ befindet, die Supraleiter mit Hoch-T_{c}-Supraleitermaterial enthalten, **dadurch gekennzeichnet, dass** die Erregerwicklung aus mindestens einem transponierten Röbelleiter (20) mit wenigstens annähernd rechteckigem Querschnitt erstellt ist, wobei dieser transponierte Röbelleiter N axial verlaufende, um seine Mittelachse verseilte Einzelleiterbänder (21i) mit dem Hoch-T_{c}-Supraleitermaterial aufweist, deren Flachseiten (f) zumindest annähernd parallel zu dem jeweiligen Bodenteil (12a, 12b) ausgerichtet sind, und wobei die Anzahl N an Einzelleiterbändern (21i) des transponierten Röbelleiters (20) mindestens 5 beträgt.

2. Maschine nach Anspruch 1, **dadurch gekennzeichnet, dass** die Erregerwicklung (16) mehrere Lagen (16i) aus dem transponierten Röbelleiter (20) aufweist.

3. Maschine nach Anspruch 1 oder 2, **dadurch gekennzeichnet, dass** die Erregerwicklung (16) aus mehreren Rennbahnspulen (3) zusammengesetzt ist.

4. Maschine nach einem der vorangehenden Ansprüche, **dadurch gekennzeichnet, dass** die Einzelleiterbänder (21i) innerhalb des transponierten Röbelleiters (20) jeweils mit einer Isolation oder einem elektrisch schlecht leitenden Belag versehen sind.

5. Maschine nach einem der vorangehenden Ansprüche, **dadurch gekennzeichnet, dass** der transponierte Röbelleiter (20) von einer Isolation umhüllt ist.

6. Maschine nach einem der vorangehenden Ansprüche, **gekennzeichnet durch** eine mit einem ausgehärteten Harz imprägnierte Erregerwicklung (16).

7. Maschine nach einem der vorangehenden Ansprüche, **dadurch gekennzeichnet, dass** die Halteeinrichtung (17) rinnen- oder schienenartige Halteelemente (17a, 17b) aufweist, die jeweils in Richtung auf die Rotorachse (A) hin eine Öffnung zur Aufnahme der Erregerwicklung (16) oder Teilen von dieser bilden.

8. Maschine nach Anspruch 7, **dadurch gekennzeichnet, dass** die Halteelemente (17a, 17b) aus Metall bestehen.

9. Maschine nach Anspruch 8, **dadurch gekennzeichnet, dass** sich zwischen den Halteelementen (17a, 17b) und dem jeweiligen Teil der Erregerwicklung (16) ein isolierendes Zwischenelement (22) befindet.

10. Maschine nach einem der Ansprüche 7 bis 9, **dadurch gekennzeichnet, dass** in oder an den Halteelementen (17a, 17b) mindestens ein Kühlkanal (24) für ein Kältemittel (K) vorhanden ist.

11. Maschine nach Anspruch 10 oder 11, **dadurch gekennzeichnet, dass** der mindestens eine Kühlkanal (24) Teil eines Thermosiphon-Leitungssystems ist.

12. Maschine nach Anspruch 10 oder 11, **dadurch gekennzeichnet, dass** sich der mindestens eine Kühlkanal (24) an der der Erregerwicklung (16) zugewandten Seite des jeweiligen Halteelementes (17a, 17b) befindet.

13. Maschine nach einem der Ansprüche 7 bis 12, **dadurch gekennzeichnet, dass** sich zwischen den Halteelementen (17a, 17b) und dem jeweiligen Teil der Erregerwicklung (16) jeweils mindestens ein Element (23) aus einem thermisch gut-leitenden Material befindet.

14. Maschine nach einem der vorangehenden Ansprüche, **gekennzeichnet durch** einen Stator (9), der für einen Rotor mit normalleitender Erregerwicklung ausgelegt und den Rotor (2) mit der Erregerwicklung (16) aus dem wenigstens einen transponierten Röbelleiter (20) mit dem Hoch-T_{c}-Supraleitermaterial enthält.

15. Maschine nach Anspruch 14, **gekennzeichnet durch** einen Spalt (S) zwischen dem Stator (9) und dem Rotor (2) mit dem transponierten Röbelleiter (20), der größer ist als der Spalt einer Maschine mit demselben Stator und einem Rotor mit normalleitender Erregerwicklung bei gleicher Leistung.

## Claims

1. Machine having a rotor (2) which is mounted such that it can rotate about a rotation axis (A) and contains an uncooled rotor body (4), which has recesses (11a, 11b) which extend axially on its outer face, with bottom parts (12a, 12b) which face the rotation axis (A) and lie along circle chords when seen in cross section, with at least one respective cryostat (13a, 13b) being arranged in the recesses (11a, 11b), in which cryostat (13a, 13b) a field winding (16), which is held by a holding device (17) with strain relief on the respective bottom part (12a, 12b), with winding parts (16a, 16b) of the racetrack coil type is located, which winding parts (16a, 16b) contain superconductors composed of high-T_{c} superconductor material, **characterized in that** the field winding is produced from at least one transposed conductor (20) having an at least approximately rectangular cross section, with this transposed conductor having N axially running individual conductor strips (21i) which are twisted about its centre axis and are composed of the high-T_{c} superconductor material, whose flat faces (f) are aligned at least approximately parallel to the respective bottom part (12a, 12b), and with the number N of individual conductor strips (21i) of the transposed conductor (20) being at least 5.

2. Machine according to Claim 1, **characterized in that** the field winding (16) has a plurality of layers (16i) composed of the transposed conductor (20).

3. Machine according to Claim 1 or 2, **characterized in that** the field winding (16) is composed of a plurality of racetrack coils (3).

4. Machine according to one of the preceding claims, **characterized in that** the individual conductor strips (21i) within the transposed conductor (20) are each provided with insulation or with a covering of poor electrical conductivity.

5. Machine according to one of the preceding claims, **characterized in that** the transposed conductor (20) is sheathed with insulation.

6. Machine according to one of the preceding claims, **characterized by** a field winding (16) impregnated with a cured resin.

7. Machine according to one of the preceding claims, **characterized in that** the holding device (17) has holding elements (17a, 17b) like grooves or rails, which each form an opening in the direction of the rotor axis (A) for holding the field winding (16) or parts of it.

8. Machine according to Claim 7, **characterized in that** the holding elements (17a, 17b) are composed of metal.

9. Machine according to Claim 8, **characterized in that** an insulating intermediate element (22) is located between the holding elements (17a, 17b) and the respective part of the field winding (16).

10. Machine according to one of Claims 7 to 9, **characterized in that** at least one cooling channel (24) for a coolant (K) is provided in or on the holding elements (17a, 17b).

11. Machine according to Claim 10 or 11, **characterized in that** the at least one cooling channel (24) is part of a thermosiphon line system.

12. Machine according to Claim 10 or 11, **characterized in that** the at least one cooling channel (24) is located on the side of the respective holding element (17a, 17b) which faces the field winding (16).

13. Machine according to one of Claims 7 to 12, **characterized in that** at least one element (23) composed of a thermally highly conductive material is located between each of the holding elements (17a, 17b) and the respective part of the field winding (16).

14. Machine according to one of the preceding claims, **characterized by** a stator (9) which is designed for a rotor with a normally conductive field winding, and contains the rotor (2) with the field winding (16) composed of the at least one transposed conductor (20) with the high-T_{c} superconductor material.

15. Machine according to Claim 14, **characterized by** a gap (S) between the stator (9) and the rotor (2) with the transposed conductor (20), which gap (S) is larger than the gap in a machine with the same stator and a rotor with a normally conductive field winding of the same rating.

## Revendications

1. Machine ayant un rotor (2) monté rotatif autour d'un axe de rotation (A) et contenant un corps de rotor non refroidi (4) qui comporte des évidements (11a, 11b) s'étendant axialement sur son côté extérieur, avec des parties de fond (12a, 12b) proches de l'axe de rotation (A) et situées, vues en coupe transversale, le long de cordes de cercle, au moins un cryostat (13a, 13b) étant agencé respectivement dans les évidements (11a, 11b), cryostat dans lequel se trouve un enroulement d'excitation (16) maintenu par un dispositif de maintien (17) ayant un absorbeur de traction sur la partie de fond respective (12a, 12b) et comportant des éléments d'enroulement (16a, 16b) du type bobines en forme de pistes de course qui contiennent des supraconducteurs en un matériau supraconducteur à haute T_{C}, **caractérisée par le fait que** l'enroulement d'excitation est fabriqué à partir d'au moins un conducteur du type Roebel transposé (20) ayant une section transversale au moins approximativement rectangulaire, ce conducteur Roebel transposé comportant N rubans de conducteurs individuels (21i) qui s'étendent axialement, qui sont toronnés autour de leur axe central, qui sont en un matériau supraconducteur à haute T_{C} et dont les côtés plats (f) sont orientés au moins approximativement parallèlement à la partie de fond respective (12a, 12b) et le nombre N de rubans de conducteurs individuels (21i) du conducteur Roebel transposé (20) étant au moins égal à 5.

2. Machine selon la revendication 1, **caractérisée par le fait que** l'enroulement d'excitation (16) comporte plusieurs couches (16i) constituées à partir du conducteur Roebel transposé (20).

3. Machine selon la revendication 1 ou 2, **caractérisée par le fait que** l'enroulement d'excitation (16) est composé de plusieurs bobines en forme de pistes de course (3).

4. Machine selon l'une des revendications précédentes, **caractérisée par le fait que** les rubans de conducteurs individuels (21i) à l'intérieur du conducteur Roebel transposé (20) sont munis chacun d'un isolant ou d'un revêtement mauvais conducteur électrique.

5. Machine selon l'une des revendications précédentes, **caractérisée par le fait que** le conducteur Roebel transposé (20) est enveloppé par un isolant.

6. Machine selon l'une des revendications précédentes, **caractérisée par** un enroulement d'excitation (16) imprégné d'une résine durcie.

7. Machine selon l'une des revendications précédentes, **caractérisée par le fait que** le dispositif de maintien (17) comporte des éléments de maintien (17a, 17b) du type canaux ou rails qui forment à chaque fois en direction de l'axe de rotor (A) une ouverture pour le logement de l'enroulement d'excitation (16) ou de parties de celui-ci.

8. Machine selon la revendication 7, **caractérisée par le fait que** les éléments de maintien (17a, 17b) sont en métal.

9. Machine selon la revendication 8, **caractérisée par le fait qu'**un élément intercalaire isolant (22) se trouve entre les éléments de maintien (17a, 17b) et la partie respective de l'enroulement d'excitation (16).

10. Machine selon l'une des revendications 7 à 9, **caractérisée par le fait qu'**au moins un canal de refroidissement (24) destiné à un fluide réfrigérant (K) se trouve dans ou sur les éléments de maintien (17a, 17b).

11. Machine selon la revendication 10 ou 11, **caractérisée par le fait que** le ou les canaux de refroidissement (24) font partie d'un système de canalisation du type thermosiphon.

12. Machine selon la revendication 10 ou 11, **caractérisée par le fait que** le ou les canaux de refroidissement (24) se trouvent sur celui des côtés de l'élément de maintien respectif (17a, 17b) qui est proche de l'enroulement d'excitation (16).

13. Machine selon l'une des revendications 7 à 12, **caractérisée par le fait que**, entre les éléments de maintien (17a, 17b) et la partie respective de l'enroulement d'excitation (16), se trouve à chaque fois au moins un élément (23) en un matériau bon conducteur thermique.

14. Machine selon l'une des revendications précédentes, **caractérisée par** un stator (9) qui est conçu pour un rotor avec enroulement d'excitation à conduction normal et qui contient le rotor (2) avec l'enroulement d'excitation (16) constitué du ou des conducteurs Roebel transposés (20) avec le matériau supraconducteur à haute T_{C}.

15. Machine selon la revendication 14, **caractérisée par** un entrefer (S) entre le stator (9) et le rotor (2) avec le conducteur Roebel transposé (20) qui est plus grand que l'entrefer d'une machine avec le même stator et un rotor avec enroulement d'excitation à conduction normale pour une puissance identique.
